# EUROPÄISCHE PATENTSCHRIFT

(11) **EP 0 350 687 B1**
(45) Veröffentlichungstag und Bekanntmachung des Hinweises auf die Patenterteilung: **31.08.1994**
(21) Anmeldenummer: 89111532.1
(22) Anmeldetag: 24.06.1989
(51) Int. Cl.: C09B 67/12

(54) **Verfahren zur Überführung von Rohkupferphthalocyaninen in eine Pigmentform**
Process for the conversion of a raw copper phthalocyanine into a pigmentary form
Procédé de transformation d'une phtalocyanine de cuivre brute en une forme pigmentaire

(30) Priorität: 15.07.1988 DE 3824054
(43) Veröffentlichungstag der Anmeldung: 17.01.1990
(73) Patentinhaber: BASF Aktiengesellschaft, 67063 Ludwigshafen (DE)
(72) Erfinder: Fath, Wolfgang, Dr., D-6945 Hirschberg (DE); Nachtrab, Rainer, D-6700 Ludwigshafen (DE); Polster, Rudolf, Dr., D-6710 Frankenthal (DE)

(56) Entgegenhaltungen:
- FR-A- 2 237 941
- US-A- 4 024 154
- US-A- 4 077 972
- US-A- 4 371 643

## Beschreibung

Die Erfindung betrifft ein Verfahren zur Überführung von Rohkupferphthalocyaninen in eine Pigmentform durch Behandlung von feinteiligen, in der Kristallisation gestörten und stark agglomerierten Rohkupferphthalocyaninen mit einem organischen Lösungsmittel, wobei die Primärteilchengröße, erzeugt durch Kugelvermahlung von Rohkupferphthalocyaninen, unter 0,1 µm liegt.

Organische Pigmente fallen im allgemeinen bei ihrer Herstellung in einer physikalischen Form an, die zur Anwendung ungeeignet ist. Diese sogenannten Rohpigmente besitzen beispielsweise eine zu große Teilchengröße, eine uneinheitliche oder nicht geeignete Kristallform oder eine zu große Agglomerationsneigung.

Daher werden diese Rohpigmente nach einer Reinigung zerkleinert, die Reste der Ausgangsprodukte, unerwünschte Nebenprodukte und ähnliches entfernt. Die so gewonnenen Pulver besitzen jedoch aufgrund eines breiten Teilchengrößenspektrums schlechte färberische Eigenschaften.

Eine nachfolgende Behandlung mit organischen Lösungsmitteln engt das Teilchengrößenspektrum ein, außerdem können dabei andere anwendungstechnisch wichtige Größen, wie beispielsweise Teilchenform, Fließfähigkeit, Dispergierbarkeit, Farbstärke, Licht- und Wetterechtheit zum Teil gezielt eingestellt werden.

In der Literatur sind dazu bisher Verfahren bekannt geworden, bei denen diese Formierung der Pigmente entweder batchweise im Rührkessel - belgische Patentschrift 621 890 - oder kontinuierlich oder diskontinuierlich in Knetern mit Hilfe von Zusatzstoffen, wie beispielweise Salzen, und gegebenenfalls mit Einbeziehung des Zerkleinerungsschrittes durchgeführt wird - DE-PS 23 36 919.

US-A-4 371 643 beschreibt ein Verfahren, das von unzerkleinertem Rohkupferphthalocyanin ausgeht. In einer Kugelmühle wird das Rohkupferphthalocyanin diskontinuierlich zerkleinert. Gleichzeitig wird durch Zusatz eines Hydroxylgruppen enthaltenden und eines polaren Lösungsmittels das Teilchenspektrum durch Umlösen eingeengt. Dieses Verfahren benötigt jedoch lange Verweilzeiten und große Apparatevolumina.

Die Formierung im Rührkessel bedingt aufgrund langer Formierungszeiten - bis zu mehreren Stunden - und niedriger Pigmentkonzentrationen wegen der teilweisen schlechten Fließfähigkeit große Apparatevolumina und große Lösungsmittelmengen, deren umweltfreundliche Handhabung erhebliche Schwierigkeiten mit sich bringen kann. Außerdem kann durch den batchweisen Betrieb eine gleichbleibende Produktqualität nicht gewährleistet werden.

Die diskontinuierliche bzw. kontinuierliche Formierung in Knetern bzw. in Schneckenmaschinen unter Zuhilfenahme von Salzen birgt wegen der hohen Salzfracht unter Umständen Umweltprobleme, fordert aber immer wegen der Salzmenge und wegen langer Verweilzeiten große Apparatevolumina.

Es stellte sich daher die Aufgabe, ein Formierungsverfahren für Rohkupferphthalocyanine bereitzustellen, welches ohne Hilfsmittel wie beispielsweise Salze und mittels kleinerer Apparatevolumina ein Pigment liefert, das die oben angeführten Eigenschaften herkömmlich formierter Pigmente besitzt oder diese noch übertrifft.

Dies wird erfindungsgemäß dadurch gelöst, daß eine Suspension, bestehend aus dem organischen Lösungsmittel und dem gemahlenen Rohkupferphthalocyanin (im folgenden Lösungsmittel-Pigment-Suspension genannt), mit Pigmentkonzentrationen von 15 bis 55 Gew.-% und Lösungsmittelkonzentrationen von 15 bis 85 Gew.-%, die Wasser von 0 bis 30 Gew.-% enthalten können, Schergefällen zwischen 1000 bis 20000 s⁻¹ über einen Zeitraum von 2 bis 1000 s unterzogen wird, wobei die Energieaufnahme während der Scherung 0,01 bis 0,2 kWh/kg durchgesetztem Pigment beträgt, und wobei der Lösungsmittel-Pigment-Suspension danach Wasser in der 0,1- bis 10fachen Menge des Lösungsmittels zum definierten Abbruch der Formierung zudosiert und homogen mit der Suspension vermischt wird.

Die Erfindung wird durch die Ansprüche charakterisiert.

Weitere Merkmale des erfindungsgemäßen Verfahrens sind Gegenstand der Unteransprüche.

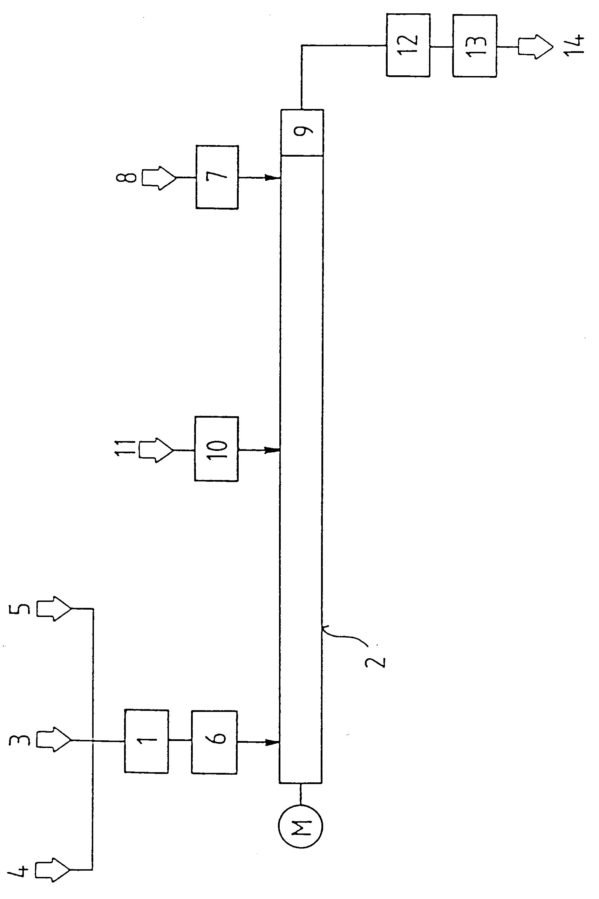

Eine für das Verfahren gemäß der vorliegenden Erfindung vorteilhaft verwendbare Vorrichtung zeigt das Verfahrensfließbild gemäß der Zeichnung.

Über eine Dosiereinrichtung 1 werden einer Schneckenmaschine 2 - beispielsweise einer modifizierten Ein- oder Zweiwellenschneckenmaschine, wie sie in der Kunststoffindustrie eingesetzt werden - entweder getrennt oder gemeinsam gemahlenes Rohpigment, entweder als trockenes Pulver oder als wasserfeuchter Filterkuchen 3, Tetrahydrofuran 4 und wenn erforderlich Wasser 5 kontinuierlich zugeführt. Je nach Fließeigenschaften der entstehenden Suspension und der Ausführung der Schneckenmaschine ist zwischen Dosiereinrichtung und Schneckenmaschine ein zwangsförderndes System 6 einzuschalten, das den Transport der Suspension durch die Schneckenmaschine übernimmt. Hierfür übliche Apparate sind Exzenterschneckenpumpen oder gegenläufig dichtkämmende Doppelschnecken.

Die Schneckenmaschine 2 besteht aus mehreren Gehäuseelementen, die getrennt temperiert werden können. Die Schneckenwelle ist mit verschiedenen Schneckenelementen zum Fördern und Scherelementen bestückt. Zur technischen Realisierung der Scherelemente können beispielsweise Rotor-Stator-Systeme oder Knetelemente, wie in der Kunststoffverarbeitung üblich, verwendet werden. Nach dem Verlassen der Scherzone wird die Suspension über die Dosiereinrichtung 7 mit Wasser 8 verdünnt und in einer Mischeinrichtung 9 homogensiert. Diese Mischeinrichtung kann ein Scherelement wie oben beschrieben sein und sich innerhalb der Schneckenmaschine befinden. Das Wasser wird dann über eine Gehäusebohrung zugegeben. Erforderlichenfalls können während der Scherung über einzelne Dosiereinrichtungen 10 und Bohrungen in der Gehäusewand Hilfs- und Belegmittel 11 zugegeben werden.

Nach Verlassen der Mischeinrichtung gelangt die Suspension, je nachdem, ob ein Rohpigment oder ein gereinigtes Rohpigment bei 1 eingesetzt wurde, in eine Reinigungsstufe 12 oder direkt zur Trocknung 13. Ist die Reinigung nicht erforderlich, kann u.U. über die Dosiereinrichtung 7 die Konsistenz der Suspension so eingestellt werden, daß als Trockner Wirbelbett, Band- und Sprühtrockner eingesetzt werden können.

Die so erhaltenen Pigmente 14 übertreffen solche, die im Batch-Prozeß hergestellt werden um ca. 10 % an Farbstärke und haben sehr reine und transparente Farbtöne.

### Beispiele

1. 20 kg/h in einer Kugelmühle trocken gemahlenes Cu-Phthalocyanin (gereinigt, Kristallform: α-Gehalt 40 %) werden zusammen mit 26 kg/h Tetrahydrofuran und 6,5 kg/h Wasser in die Schneckenmaschine gegeben und bei einem max. Schergefälle von 7000 s⁻¹ während 44 s geschert, anschließend werden 42 kg/h Wasser zugemischt und die so gewonnene Suspension bei 80°C getrocknet. Man erhält so ein qualitativ hochwertiges Pigment der β-Kristallform für den Offsetdruck mit ausgezeichneten Färbeeigenschaften.
2. 14 kg/h gemahlenes Cu-Phthalocyanin (nicht gereinigt, α-Gehalt 60 %) werden zusammen mit 26 kg/h eines azeotropen Gemisches aus Tetrahydrofuran und Wasser in die Schneckenmaschine gegeben und bei einem maximalen Schergefälle von 6800 s⁻¹ während 65 s geschert, anschließend werden 132 kg/h Wasser zugesetzt, das Cu-Phthalocyanin filtriert und getrocknet. Man erhält so ein qualitativ hochwertiges Pigment der β-Kristallform für den Offsetdruck mit ausgezeichneten Färbeeigenschaften.
3. 26,5 kg/h eines wasserfeuchten Filterkuchens von gemahlenem Cu-Phthalocyanin (gereinigt α-Gehalt 60 %) mit 62 % Feststoffgehalt werden zusammen mit 23,8 kg/h eines azeotropen Gemisches aus Tetrahydrofuran und Wasser bei einem Schergefälle von 6800 s⁻¹ während 52 s geschert. Anschließend werden 136 kg/h Wasser zugesetzt und die Suspension getrocknet. Man erhält so ein qualitativ hochwertiges Pigment der β-Kristallform für den Offsetdruck mit ausgezeichneten Färbeeigenschaften.
4. Wie Beispiel 3, jedoch mit einer Wasserzumischung von nur 32,5 kg/h statt 136 kg/h. Dabei ergibt sich eine nicht fließfähige Paste im Gegensatz zu einer dünnflüssigen Suspension in Beispiel 3. Die färberischen Eigenschaften entsprechen denen aus Beispiel 3.

## Patentansprüche

1. Verfahren zur Überführung von Rohkupferphthalocyaninen in eine Pigmentform durch Behandlung von feinteiligen, in der Kristallisation gestörten und stark agglomerierten Rohkupferphthalocyaninen mit einem organischen Lösungsmittel, wobei die Primärteilchengröße, erzeugt durch Kugelvermahlung von Rohkupferphthalocyaninen, unter 0,1 µm liegt, dadurch gekennzeichnet, daß eine Suspension, bestehend aus dem organischen Lösungsmittel und dem gemahlenen Rohkupferphthalocyanin (im folgenden Lösungsmittel-Pigment-Suspension genannt), mit Pigmentkonzentrationen von 15 bis 55 Gew.-% und Lösungsmittelkonzentrationen von 15 bis 85 Gew.-%, die Wasser von 0 bis 30 Gew.-% enthalten können, Schergefällen zwischen 1000 bis 20000 s⁻¹ über einen Zeitraum von 2 bis 1000 s unterzogen wird, wobei die Energieaufnahme während der Scherung 0,01 bis 0,2 kWh/kg durchgesetztem Pigment beträgt, und wobei der Lösungsmittel-Pigment-Suspension danach Wasser in der 0,1- bis 10fachen Menge des Lösungsmittels zum definierten Abbruch der Formierung zudosiert und homogen mit der Suspension vermischt wird.

2. Verfahren nach Anspruch 1, dadurch gekennzeichnet, daß als organisches Lösungsmittel Tetrahydrofuran verwendet wird.

3. Verfahren nach den Ansprüchen 1 und 2, dadurch gekennzeichnet, daß das Schergefälle in den Scherzonen vorzugsweise 5000 bis 16000 s⁻¹ beträgt.

4. Verfahren nach den Ansprüchen 1 und 2, dadurch gekennzeichnet, daß die Pigmentkonzentration in der gescherten Suspension vorzugsweise 18 bis 45 Gew.-% beträgt.

5. Verfahren nach den Ansprüchen 1 und 2, dadurch gekennzeichnet, daß die Verweilzeit in den Scherzonen vorzugsweise 5 bis 500 s beträgt.

6. Verfahren nach den Ansprüchen 1 und 2, dadurch gekennzeichnet, daß die nach der Scherung der Suspension zudosierte Wassermenge das das 0,2 bis 5fache der darin enthaltenen Lösungsmittelmenge beträgt.

7. Verfahren nach den Ansprüchen 1 und 2, dadurch gekennzeichnet, daß die Energieaufnahme der Suspension während der Scherung vorzugsweise 0,02 bis 0,12 kWh/kg durchgesetztem Pigment beträgt.

## Claims

1. A process for transforming a crude copper phalocyanine into a pigmentary state by treating a finely divided but imperfectly crystallized and highly aggregated crude copper phthalocyanine having a primary particle size, produced by ball milling, of less than 0.1 µm with an organic solvent, which comprises subjecting a suspension of the organic solvent and the milled crude copper phthalocyanine (hereinafter referred to as the solvent/pigment suspension), which has a pigment concentration of from 15 to 55 % by weight and a solvent concentration of from 15 to 85 % by weight and which may contain water in a concentration of from 0 to 30 % by weight, to a shear gradient of from 1000 to 20000 s⁻¹ for a period of from 2 to 1000 s with an energy uptake during shearing of from 0.01 to 0.02 kWh/kg of pigment throughput, then metering water into the solvent/pigment suspension in an amount of from 0.1 to 10 times the amount of the solvent, to effect a defined discontinuation of the conditioning process, and finally mixing the suspension until homogeneous.

2. A process as claimed in claim 1, wherein the organic solvent used is tetrahydrofuran.

3. A process as claimed in claim 1 or 2, wherein the shear gradient in the shearing zone is preferably from 5000 to 16000 s⁻¹.

4. A process as claimed in claim 1 or 2, wherein the pigment concentration in the sheared suspension is preferably from 18 to 45 % by weight.

5. A process as claimed in claim 1 or 2, wherein the residence time in the shearing zone is preferably from 5 to 500 s.

6. A process as claimed in claim 1 or 2, wherein the amount of water metered in after the suspension has been sheared is from 0.2 to 5 times the amount of solvent present in the suspension.

7. A process as claimed in claim 1 or 2, wherein the energy taken up by the suspension during shearing is preferably from 0.02 to 0.12 kWh/kg of pigment throughput.

## Revendications

1. Procédé pour mettre des phtalocyanines de cuivre brutes sous la forme pigmentaire par traitement des phtalocyanines de cuivre brutes en fines particules, dont la cristallisation a été troublée et qui sont fortement agglomérées, à l'aide d'un solvant organique, la dimension de particule primaire obtenue par broyage des phtalocyanines de cuivre brutes au broyeur à boulets étant inférieure à 0,1 µm, caractérisé en ce que l'on soumet une suspension consistant en le solvant organique et la phtalocyanine de cuivre brute broyée, ci-après "suspension pigment-solvant", à des concentrations en pigment de 15 à 55 % en poids et des concentrations en solvant de 15 à 85 % en poids, et une teneur en humidité qui peut aller de 0 à 30 % en poids, à des cisaillements de 1000 à 2000 s⁻¹ pendant une durée de 2 à 1000 s, l'absorption d'énergie au cours du cisaillement étant de 0,01 à 0,2 kWh/kg de pigment traité, après quoi on ajoute à la suspension pigment-solvant, pour interruption définie du finissage, de l'eau en quantité de 0,1 à 10 fois la quantité de solvant, et on mélange avec la suspension jusqu'à homogénéité.

2. Procédé selon la revendication 1, caractérisé en ce que le solvant organique utilisé est le tétrahydrofuranne.

3. Procédé selon les revendications 1 et 2, caractérisé en ce que les cisaillements dans les zones de cisaillement sont de préférence de 5000 à 16 000 s⁻¹.

4. Procédé selon les revendications 1 et 2, caractérisé en ce que la concentration en pigment de la suspension soumise à cisaillement est de préférence de 18 à 45 % en poids.

5. Procédé selon les revendications 1 et 2, caractérisé en ce que la durée de passage dans les zones de cisaillement est de préférence de 5 à 500 s.

6. Procédé selon les revendications 1 et 2, caractérisé en ce que la quantité d'eau ajoutée après cisaillement de la suspension est de 0,2 à 5 fois la quantité du solvant qu'elle contient.

7. Procédé selon les revendications 1 et 2, caractérisé en ce que l'absorption d'énergie par la suspension au cours du cisaillement est de préférence de 0,02 à 0,12 kWh/kg de pigment traité.
